# EUROPEAN PATENT SPECIFICATION

(11) **EP 4 276 080 B1**
(45) Date of publication and mention of the grant of the patent: **12.08.2026**
(21) Application number: 21908118.9
(22) Date of filing: 28.12.2021
(51) Int. Cl.: C03C 13/00, C03B 37/022, C03C 3/093

(54) **GLASS FIBER WITH LOW THERMAL EXPANSION COEFFICIENT**
GLASFASER MIT NIEDRIGEM WÄRMEAUSDEHNUNGSKOEFFIZIENTEN
FIBRE DE VERRE À FAIBLE COEFFICIENT DE DILATATION THERMIQUE

(30) Priority: 06.01.2021 CN 202110010617
(43) Date of publication of application: 15.11.2023
(73) Proprietor: Taishan Fiberglass Inc., Taian, Shandong 271000 (CN)
(72) Inventor: TANG, Zhiyao, Taian City, Shandong 271000 (CN); LI, Yongyan, Taian City, Shandong 271000 (CN)
(74) Representative: Gulde & Partner
(86) International application number: PCT/CN2021/142138
(87) International publication number: WO 2022/148275

(56) References cited:
- CN-A- 101 300 199
- CN-A- 102 976 620
- CN-A- 103 339 076
- CN-A- 103 347 831
- CN-A- 104 781 202
- CN-A- 106 186 672
- CN-A- 112 624 620
- CN-A- 112 745 031
- CN-A- 112 745 032
- US-A1- 2018 029 925
- US-A1- 2018 127 305

## Description

### BACKGROUND OF THE INVENTION

### 1. Technical Field

The present invention relates to the technical field of glass fibers, and in particular to a low thermal expansion coefficient glass fiber.

### 2. Description of Related Art

The application of glass fibers has more and more extensive prospects, but the high thermal expansion coefficients of most glass series at present limit their demands in high-precision parts such as electronic printed circuit boards (PCB) and automobile industry. The thermal expansion coefficient is an important thermal property of glass fibers and depends to a large extent on the chemical composition of the glass fibers.

Among the common glass fiber series, the expansion coefficient of S series glass is about 4.0×10⁻⁶/°C, and the expansion coefficient of D series glass is about 3.5×10⁻⁶/°C. The expansion coefficients of S series glass and D series glass are large, which cannot meet the demands of high-precision parts.

The expansion coefficient of T series glass is low, but the content of SiO₂ and Al₂O₃ in T series glass is very high (≥89%), which causes the temperature of T series glass at 1000 Poise to exceed 1460°C, and the difference between the temperature of 1000 Poise and the liquidus temperature (operating temperature range) is very small, so the T series glass is very difficult to process and low in fiber forming rate and is not suitable for industrial application.

Patent application US 2018/127305 A1 describes glass fibers with low thermal expansion coefficient. Chinese patent CN103347831A discloses a glass composition with a low thermal expansion coefficient and a glass fiber prepared therefrom. The expansion coefficient of the glass composition is 3.0-3.6×10⁻⁶/°C, but its fiber forming temperature (about 1365-1400°C) and crystallization upper limit temperature (about 1320-1370°C) are high, and its elastic modulus is 89-90 GPa. Although the expansion coefficient of the glass fiber disclosed in the patent is decreased, it is still not enough to meet higher demands. In addition, the elastic modulus of the glass fiber is relatively low, and its fiber forming temperature and crystallization upper limit temperature are still relatively high.

Therefore, for higher demands, further decreasing the expansion coefficient of glass fibers while maintaining sufficient elastic modulus is an urgent problem to be solved.

### BRIEF SUMMARY OF THE INVENTION

In order to make up for the deficiencies of the prior art and solve the problems in the prior art that the expansion coefficients of glass fibers are not low enough, production is difficult, and mechanical properties such as elastic modulus cannot meet the requirements at the same time, the present invention provides a low thermal expansion coefficient glass fiber. In the present invention, SiO₂, Al₂O₃, and MgO are the main ternary system. In the system, the contents of SiO₂ and Al₂O₃ are controlled, B₂O₃, ZnO, TiO₂, ZrO₂, H_{f}O₂, and Li₂O are added, and CaO, K₂O, and Na₂O are definitely not added. Because ZnO and TiO₂, ZrO₂, and H_{f}O₂ have a coordination complementarity effect between network bodies in the glass formation process, when the contents of ZnO, TiO₂, ZrO₂, and H_{f}O₂ and the ratio of ZnO/(TiO₂+ZrO₂+H_{f}O₂) are within certain ranges, synergistic effects can be achieved, the thermal expansion coefficient can be significantly decreased, and meanwhile the elastic modulus can be guaranteed to be more than 93 GPa.

The technical solution of the present invention is as follows:

A low thermal expansion coefficient glass fiber is characterized by being composed of the following ingredients in percentage by weight:

| | |
|---|---|
| SiO₂ | 55.0-63.0% |
| Al₂O₃ | 17.5-25.0% |
| MgO | 9.0-16.5% |
| B₂O₃ | 2.0-9.0% |
| ZnO | 0.1-4.5% |
| TiO₂ | 0.1-4.0% |
| ZrO₂ | 0.1-3.0% |
| H_{f}O₂ | 0.1-2.0% |
| Li₂O | 0.1-2.0% |

other inevitable impurities balance,
where

| | |
|---|---|
| TiO₂+ZrO₂+H_{f}O₂ | 1.0-5.0% |
| ZnO / (TiO₂+ZrO₂+H_{f}O₂) | 0.5-1.5 |
| SiO₂+B₂O₃ | ≥ 59%. |

As a preferred solution, the low thermal expansion coefficient glass fiber is composed of the following ingredients in percentage by weight:

| | |
|---|---|
| SiO₂ | 57.0-62.0% |
| Al₂O₃ | 18.5-23.0% |
| MgO | 9.5-13.0% |
| B₂O₃ | 3.0-7.0% |
| ZnO | 1.5-4.0% |
| TiO₂ | 0.5-2.0% |
| ZrO₂ | 0.3-2.0% |
| H_{f}O₂ | 0.2-1.5% |
| Li₂O | 0.5-2.0% |
| Fe₂O₃ | ≤0.3% |

other inevitable impurities balance.

As a preferred solution, the sum of the contents of ZnO, TiO₂, ZrO₂ and H_{f}O₂ is 2.0-8.0%.

As a further preferred solution, ZnO/(TiO₂+ZrO₂+H_{f}O₂) is 0.5-1.1.

As a preferred solution, the sum of the contents of SiO₂ and B₂O₃ is greater than or equal to 61%.

As a preferred solution, the sum of the contents of SiO₂ and Al₂O₃ is less than or equal to 80%. When the sum of the contents of SiO₂ and Al₂O₃ is too high, the clarification temperature and the processing difficulty will be increased.

As a preferred solution, the glass fiber has an expansion coefficient of between 2.77×10⁻⁶/°C and 2.98×10⁻⁶/°C.

As a preferred solution, the glass fiber has a fiber forming temperature of between 1330°C and 1365°C.

As a preferred solution, the glass fiber has a crystallization upper limit temperature of between 1280°C and 1325°C.

As a preferred solution, the glass fiber has an elastic modulus of more than 93 GPa.

Each ingredient of the glass fiber of the present invention is described as follows:

SiO₂ is the basic ingredient that forms glass grids, and is also the largest proportion of element in the low expansion glass composition, because the Si-O bond is large in bonding force and stable, and has a very small expansion coefficient, which may reach the order of 10⁻⁷. Besides, the Si-O bond can also effectively improve the mechanical strength, chemical stability and thermal stability of glass, but has a high melting temperature and fiber forming difficulty, and only an appropriate content can provide the best performance. In the glass fiber system of the present invention, the content of SiO₂ is within a range of55-63%, preferably 57-62%.

B₂O₃ has a relatively low expansion coefficient and good fluxing property. B₂O₃ exists as a boron-oxygen triangle under high-temperature melting conditions, which can reduce the high-temperature viscosity of glass, thereby reducing the clarification temperature of the glass. In a low-temperature glassy state, B₂O₃ can tend to form a boron-silicon tetrahedron, which enables the structure to be more compact to decrease the expansion coefficient of glass. The replacement of SiO₂ with an appropriate amount of B₂O₃ can decrease the thermal expansion coefficient, and can also reduce the viscosity of glass, reduce the clarification temperature and guarantee the melting of glass with a low bubble rate. However, boron oxide is prone to the phase separation of molten glass and easy to volatilize, and the volatiles corrode refractory materials. The content of B₂O₃ in the present invention is determined to be 2.0-9.0%, a more preferable range being 3.0-7.0%.

Al₂O₃ is a network intermediate. By introducing a small amount of Al³⁺, non-bridging oxygen can be captured to form an aluminum-oxygen tetrahedron into a silicon-oxygen network, which makes the glass structure tend to be compact, decreases the expansion coefficient, and improves the elastic modulus. However, the aluminum-oxygen tetrahedron [AlO₄] has a larger volume and a looser structure than the silicon-oxygen tetrahedron, so the higher Al₂O₃ content increases the expansion coefficient. Therefore, the content of Al₂O₃ introduced into the glass fiber system of the present invention is 17.5-25.0%, a more preferable range being 18.5-23.0%.

MgO is a network modifier oxide with a low expansion coefficient and a relatively small ionic radius, which is more conducive to the formation of a compacter glass network structure, decreasing the expansion coefficient of glass and improving glass modulus. However, if the MgO content is too high, the crystallization upper limit temperature and the crystallization rate will increase significantly. Therefore, the MgO content of the glass fiber system in the present invention is within a range of 9.0-16.5%, preferably 9.5-13.0%.

ZnO not only has a low expansion coefficient in glass, but also may serve as a flux. The appropriate addition may effectively improve the melting and clarifying of the glass composition. The higher the content of ZnO in a certain range is, the smaller the expansion coefficient is. Zn has two coordination states, which may be a zinc-oxygen tetrahedron [ZnO₄] participating in network construction, or a zinc-oxygen octahedron [ZnO₆] outside the network. In the presence of less ZnO, the added ZnO captures "free oxygen" in the system and then its coordination number becomes 4 to participate in the formation of the network, so that the structure of the glass is strengthened, the degree of connection of the network is improved, and the stability is increased, which can decrease the expansion coefficient of the glass. When the amount of ZnO added exceeds a certain value, with the increase of ZnO content, the free oxygen content in the glass decreases, and the ratio of [ZnO₄]/[ZnO₆] decreases, which destroys the network structure of the glass and reduce the stability of the glass, thereby increasing the expansion coefficient. Therefore, the content of ZnO in the present invention is within a range of 0.1-4.5%, more preferably 1.5-4.0%.

TiO₂ is an intermediate oxide, and in the glass system of the present invention, most of TiO₂ contained enters the network structure as titanium oxide tetrahedrons [TiO₄], and an extremely small part of the TiO₂ is outside the structure as [TiO₆] octahedrons. [TiO₄] in the network absorbs sufficient free oxygen and plays a part in repairing a broken network. Zr⁴⁺ is high in bond strength and coordination, and in the glass system of the present invention, ZrO₂ has a cubic [ZrO₈] structure, which is a network outer body. H_{f} and Zr are in a same subgroup and adjacent periods in the periodic table of elements, and Hf⁴⁺ has a larger ionic radius than Zr⁴⁺ and has an [Hf₈] cubic structure in the glass system of the present invention. Zr⁴⁺ and Hf⁴⁺ with high bond strength and high coordination are in voids of the network, which gathers surrounding Si-O and B-O networks and reduces the expansion coefficient of the network. Because TiO₂ itself has a coloring ability, the content of TiO₂ in the present invention is determined to be 0.1-4.0%, a more preferable range being 0.5-2.0%, and a usage amount thereof may be reduced as much as possible in a field of materials having requirements on colors, and ZrO₂ or H_{f}O₂ may be used to substitute for TiO₂. The content of ZrO₂ is limited to 0.1-3.0%, a preferable range being 0.3-2.0%. The content of H_{f}O₂ is limited to 0.1-2.0%, preferably 0.2-1.5%.

Li₂O: Li⁺ is not an inert gas type ion and plays a role of "accumulation" in the structure. When Li⁺ replaces K⁺ and Na⁺, the chemical stability of glass can be improved. Li⁺ has high-temperature fluxing and glass melting accelerating effects. When the content of Li⁺ is too high, the accumulation effect is too strong, which causes the phase separation of glass. In the glass system of the present invention, the main function of adding Li₂O is to reduce the clarification temperature, forming temperature and crystallization upper limit temperature of the glass. The content of Li₂O in the present invention is within a range of 0.1-2.0%, preferably 0.5-2.0%.

The glass fiber system of the present invention does not contain CaO, K₂O, and Na₂O, because the above three elements have an obvious tendency to increase the expansion coefficient, where CaO is a network modifier, and Ca²⁺ has the effects of polarizing bridge oxygen and weakening Si-O bonding, which increases the expansion coefficient. K₂O and Na₂O are common alkali metal oxides in glass, and mainly play a role of breaking the network (Si-O bond) in the structure, which also increase the expansion coefficient. Therefore, the addition of ingredients containing CaO, K₂O, and Na₂O is prohibited in the present invention.

The two ingredients SiO₂ and B₂O₃ guarantee the basic network structure of the glass, and both have the characteristic of low expansion coefficient, so in the present invention, SiO₂+B₂O₃≥59.0, and more preferably SiO₂+B₂O₃≥61%.

In the present invention, SiO₂, Al₂O₃, and MgO are the main ternary system. In the system, the contents of SiO₂ and Al₂O₃ are controlled, B₂O₃, ZnO, TiO₂, ZrO₂, H_{f}O₂, and Li₂O are added, and CaO, K₂O, and Na₂O are definitely not added. Experiments show that the addition of ZnO, TiO₂, ZrO₂, and H_{f}O₂ to the glass system of the present invention achieves better effects than the use of one or two of them; and when the contents of ZnO, TiO₂, ZrO₂, and H_{f}O₂ and the ratio range of ZnO/(TiO₂+ZrO₂+H_{f}O₂) are reasonably controlled and the content ranges of other ingredients are optimized, the expansion coefficient of the glass fiber in the present invention is significantly reduced, and the elastic modulus can be guaranteed to be more than 93 GPa at the same time. The inventor believes that ZnO and TiO₂, ZrO₂ and H_{f}O₂ should have a coordination complementarity effect between network bodies in the glass formation process; when the contents of ZnO, TiO₂, ZrO₂, and H_{f}O₂ and the ratio of ZnO/ (TiO₂+ZrO₂+H_{f}O₂) are reasonably controlled within certain ranges, synergistic effects can be achieved, and the thermal expansion coefficient can be significantly decreased; and when the contents and the ratio are out of the aforementioned ranges, the thermal expansion coefficient of the glass system in the present invention is decreased relatively little.

The beneficial effects of the present invention are as follows:
1. According to the low expansion coefficient glass fiber of the present invention, CaO, K₂O, and Na₂O ingredients are not added, but B₂O₃, ZnO, TiO₂, ZrO₂, and H_{f}O₂ are simultaneously added, and the proportion of each element is optimized, significantly decreasing the expansion coefficient of the glass fiber in the present invention. The expansion coefficient of the glass fiber in the present invention is as low as 2.77×10⁻⁶/°C.
2. The low expansion coefficient glass fiber of the present invention has an elastic modulus as high as 93 GPa or more while a low expansion coefficient is guaranteed, which meets the requirements of high-precision parts.
3. The low expansion coefficient glass fiber of the present invention has a forming temperature (lg3.0) of 1330-1365°C, a crystallization upper limit temperature of 1280-1325°C, and a low crystallization rate. The difference between the drawing forming temperature and the crystallization upper limit temperature is ΔT>43°C, which meets the requirements of the drawing process and can achieve scale production.

### DETAILED DESCRIPTION OF THE INVENTION

The technical solutions in the embodiments of the present invention will be clearly and completely described below. The embodiments described are only some of the embodiments of the present invention, not all of them. All other embodiments obtained by those of ordinary skill in the art based on the embodiments of the present invention without any creative efforts shall fall within the protection scope of the present invention.

A production process for a low thermal expansion coefficient glass fiber includes the following steps:
(1) The mass of each raw material required is calculated according to the implementation formula, the raw materials are mixed and homogenized according to the requirements of the formula, the mixed materials having a particle size meeting the requirements are transported to a charge end hopper, and then the mixed materials are uniformly fed into an all-electric melting furnace with a feeder;
(2) The mixed materials are melted and clarified in the all-electric melting furnace;
(3) The molten glass is pulled out through a discharge spout on a discharge plate to form a glass fiber; and
(4) The glass fiber is drawn and wound to a drawing machine to form precursor fibers or yarn rolls.

**Table 1 Ingredients and specifications of raw materials**

| Mineral name | Oxide name and content | Particle size |
|---|---|---|
| Quartz powder | SiO₂≥99.0% | 100-300µm |
| Boric acid | B₂O₃≥99.0% | 0.5-1.0mm |
| Aluminum oxide | Al₂O₃≥99% | 100-300µm |
| Magnesium oxide | MgO≥89.0% | 0.1-0.5mm |
| Zinc oxide | ZnO≥99.7% | 40-50µm |
| Rutile ore | TiO₂≥95% | 40-50µm |
| Spodumene | Li₂O≥4.5%; Al₂O₃≥26%; SiO₂≥52.0% | 100-300µm |
| Zircon sand | ZrO₂≥66% | 40-50µm |
| Hafnium oxide | HfO₂≥99.9% | 40-50µm |

The present invention uses the raw materials having different particle sizes, which on the one hand reduces the crushing and grinding costs of the raw materials, and on the other hand, facilitates the discharge of bubbles generated during the melting process of the raw materials, is beneficial to the clarifying of molten glass, and decreases the hollow rate of the fiber. The bubbles in the molten glass can be easily discharged.

The present invention uses the all-electric melting furnace, which increases the melting temperature, improves the utilization of energy, reduces exhaust emission, and reduces the strict requirements for the furnace. Because boron oxide is easily volatilized at a high temperature, the all-electric melting furnace is more suitable for the characteristic of high boron oxide content in the glass system of the present invention.

Table 2 shows examples of low thermal expansion coefficient glass fibers in the present invention. Table 3 shows compositions of glass fibers in comparative examples.

**Table 2 Contents of ingredients in examples of low thermal expansion coefficient glass fibers in the present invention**

| Examples | SiO₂ | Al₂O₃ | MgO | B₂O₃ | ZnO | TiO₂ | ZrO₂ | H_{f}O₂ | LiO₂ | Other |
|---|---|---|---|---|---|---|---|---|---|---|
| 1 | 58.9% | 19.8% | 10.3% | 3.9% | 2.7% | 1.0% | 1.3% | 0.8% | 1.1% | 0.2% |
| 2 | 57.5% | 19.5% | 9.5% | 6.0% | 3.4% | 0.5% | 1.8% | 1.0% | 0.5% | 0.3% |
| 3 | 60.2% | 18.0% | 9.5% | 3.8% | 4.2% | 2.0% | 1.2% | 0.2% | 0.6% | 0.3% |
| 4 | 62.0% | 18.5% | 10.2% | 4.3% | 2.1% | 1.0% | 0.8% | 0.3% | 0.5% | 0.3% |
| 5 | 59.5% | 18.9% | 11.0% | 2.2% | 4.0% | 2.0% | 1.0% | 0.4% | 0.7% | 0.3% |
| 6 | 57.2% | 18.8% | 13.5% | 3.0% | 2.7% | 1.0% | 1.5% | 1.0% | 1.0% | 0.3% |
| 7 | 62.5% | 17.5% | 9.0% | 3.6% | 3.1% | 0.9% | 1.2% | 0.9% | 1.0% | 0.3% |
| 8 | 57.2% | 20.6% | 11.3% | 2.8% | 3.2% | 1.5% | 0.6% | 1.3% | 1.2% | 0.3% |
| 9 | 58.6% | 17.5% | 15.5% | 2.1% | 2.3% | 1.3% | 1.0% | 0.6% | 0.9% | 0.2% |
| 10 | 58.9% | 19.8% | 10.3% | 3.9% | 2.7% | 1.5% | 1.3% | 0.3% | 1.1% | 0.2% |
| 11 | 57.5% | 19.5% | 9.8% | 6.0% | 3.4% | 0.5% | 1.8% | 1.0% | 0.2% | 0.3% |

**Table 3 Compositions of glass fibers in comparative examples**

| Comparative example | SiO₂ | Al₂O₃ | MgO | B₂O₃ | ZnO | TiO₂ | ZrO₂ | H_{f}O₂ | LiO₂ | Other |
|---|---|---|---|---|---|---|---|---|---|---|
| 1 | 58.9% | 19.8% | 10.3% | 3.9% | 2.7% | 0 | 1.9% | 1.2% | 1.1% | 0.2% |
| 2 | 58.9% | 19.8% | 10.3% | 3.9% | 2.7% | 1.8% | 0 | 1.3% | 1.1% | 0.2% |
| 3 | 58.9% | 19.8% | 10.3% | 3.9% | 2.7% | 1.5% | 1.6% | 0 | 1.1% | 0.2% |
| 4 | 58.9% | 19.8% | 12.0% | 3.9% | 1.0% | 1.0% | 1.3% | 0.8% | 1.1% | 0.2% |
| 5 | 58.9% | 19.8% | 10.3% | 3.9% | 3.7% | 0.5% | 0.8% | 0.8% | 1.1% | 0.2% |
| 6 | 58.9% | 19.8% | 10.3% | 5.5% | 4.2% | 0 | 0 | 0 | 1.1% | 0.2% |
| 7 | 61.8% | 20.0% | 10.3% | 3.9% | 2.7% | 0 | 0 | 0 | 1.1% | 0.2% |
| 8 | 58.9% | 19.8% | 10.3% | 6.6% | 0 | 1.0% | 1.3% | 0.8% | 1.1% | 0.2% |
| 9 | S series glass (SiO₂ 57.2%, Al₂O₃ 21.5%, MgO 12.9%, CaO 6.7%, TiO₂ 0.2%, Na₂O 0.7%, Li₂O 0.2%, Fe₂O₃ 0.3%) | | | | | | | | | |
| 10 | E series glass (SiO₂ 54.8%, Al₂O₃ 14.6%, MgO 0.8%, CaO 23.1%, B₂O₃ 5.0%, TiO₂ 0.3%, Na₂O 0.5%, K₂O 0.3%, Fe₂O₃ 0.3%) | | | | | | | | | |
| 11 | T series glass (SiO₂ 64.9%, Al₂O₃ 24.9%, MgO 9.9%, alkali metal oxide 0.1, others 0.2) | | | | | | | | | |

When the comprehensive properties of the glass fibers in the examples and comparative examples are verified, the following parameters are selected:
1) expansion coefficient
   sample preparation: molten glass is prepared according to the formula, poured into a mold, and cut into a 4*4*25.4 mm strip sample with a cutting machine; and
   the thermal expansion coefficient between room temperature (25°C) and 300°C is measured with a Linseis DIL-75 vertical thermal dilatometer;
2) forming temperature of glass fiber (lg3.0), and temperature of the fiber at the viscosity of 1000 Poise;
3) clarification temperature, and temperature at the viscosity of 100 Poise;
4) liquidus temperature of glass, that is, critical temperature at which the glass begins to crystallize, generally a crystallization upper limit temperature of the glass;
5) ΔT, the difference between the forming temperature and the liquidus temperature; and
6) elastic modulus: measured with a universal electronic testing machine according to ASTM D2343 standards.

The property parameters of glass fibers in examples and comparative examples are shown in Table 4.

**Table 4 Property parameters of glass fibers in examples and comparative examples**

| | lg3.0/°C | Clarification temperature/°C | Liquidus temperature/°C | AT/°C | Expansion coefficient (×10⁻⁶/°C) | Elastic modulus/GPa | Hollow rate /ppm |
|---|---|---|---|---|---|---|---|
| Example 1 | 1355 | 1536 | 1294 | 61 | 2.77 | 94.55 | 0 |
| Example 2 | 1357 | 1537 | 1311 | 46 | 2.91 | 94.04 | 0 |
| Example 3 | 1358 | 1539 | 1305 | 53 | 2.95 | 93.87 | 0 |
| Example 4 | 1365 | 1552 | 1320 | 45 | 2.98 | 95.33 | 1 |
| Example 5 | 1360 | 1540 | 1307 | 53 | 2.92 | 94.61 | 0 |
| Example 6 | 1347 | 1531 | 1289 | 58 | 2.81 | 93.87 | 0 |
| Example 7 | 1356 | 1539 | 1309 | 47 | 2.84 | 95.08 | 1 |
| Example 8 | 1344 | 1527 | 1283 | 61 | 2.87 | 94.23 | 0 |
| Example 9 | 1336 | 1522 | 1280 | 56 | 2.93 | 93.39 | 0 |
| Example 10 | 1356 | 1538 | 1301 | 55 | 2.92 | 94.55 | 0 |
| Example 11 | 1363 | 1544 | 1317 | 46 | 2.78 | 94.11 | 0 |
| Comparative example 1 | 1357 | 1540 | 1295 | 62 | 3.03 | 93.72 | 0 |
| Comparative example 2 | 1353 | 1541 | 1293 | 60 | 3.02 | 93.38 | 0 |
| Comparative example 3 | 1357 | 1538 | 1294 | 63 | 3.41 | 93.51 | 0 |
| Comparative example 4 | 1354 | 1533 | 1291 | 63 | 3.27 | 93.83 | 0 |
| Comparative example 5 | 1356 | 1538 | 1300 | 56 | 3.28 | 93.59 | 0 |
| Comparative example 6 | 1348 | 1531 | 1293 | 55 | 3.62 | 92.85 | 0 |
| Comparative example 7 | 1361 | 1543 | 1301 | 60 | 3.53 | 93.97 | 1 |
| Comparative example 8 | 1353 | 1533 | 1299 | 54 | 3.05 | 93.48 | 0 |
| Comparative example 9 | 1336 | 1552 | 1292 | 44 | 4.11 | 92 | 2 |
| Comparative example 10 | 1190 | 1372 | 1081 | 109 | 5.35 | 82 | 0 |
| Comparative example 11 | 1473 | 1614 | 1467 | 6 | 3.42 | 93 | 5 |

According to Table 4,
1. Examples 1 and 10 show that when the content ratio of titanium, zirconium and hafnium is within a certain range, the decrease in the expansion coefficient of the glass fiber is very significant, and when the content of hafnium is relatively low, the expansion coefficient of the glass fiber increases.
2. Example 1 and Comparative examples 1, 2 and 3 show that when "titanium is replaced with zirconium and hafnium" or "zirconium is replaced with titanium and hafnium" or "hafnium is replaced with titanium and zirconium" in the glass fiber, although the changes in the forming temperature, clarification temperature and liquidus temperature are not obvious, but the expansion coefficient increases significantly, and the elastic modulus tends to decrease.
3. Example 1 and Comparative example 4 show that when part of the zinc is replaced with magnesium and the ratio of the zinc to the sum of titanium, zirconium and hafnium is too small (0.32), although the forming temperature and clarification temperature do not change significantly, the expansion coefficient increases very significantly.
4. Example 1 and Comparative example 5 show that when part of the titanium, zirconium and hafnium is replaced with zinc and the ratio of the zinc to the sum of titanium, zirconium and hafnium is too large (1.76), although the forming temperature and clarification temperature do not change significantly, the liquidus temperature increases relatively significantly, and the expansion coefficient increases very significantly.
5. Example 1 and Comparative examples 6, 7 and 8 show that when all titanium, zirconium and hafnium are replaced with boron and zinc, or when all titanium, zirconium and hafnium are replaced with silicon aluminum, or when all titanium, zirconium and hafnium are replaced with boron, that is, when the content of titanium, zirconium and hafnium is 0, the expansion coefficient of the glass fiber increases significantly, the liquidus temperature increases significantly, the operating temperature range decreases significantly, and the elastic modulus also tends to decrease.
6. Comparative examples 9, 10 and 11 all are types of existing glass fibers. The expansion coefficients of S glass and E glass are very large, and the silicon aluminum content of T glass is very high. Although the expansion coefficient is decreased, the forming temperature and clarification temperature are very high, and the operating temperature range is small, so the processing is very difficult.

According to the above experimental results, the inventor believes that ZnO and TiO₂, ZrO₂ and H_{f}O₂ have a very significant impact on the expansion coefficient of the glass fiber, because the ZnO and TiO₂, ZrO₂ and H_{f}O₂ have a coordination complementarity effect between network bodies in the glass formation process; therefore, when the contents of ZnO, TiO₂, ZrO₂, and H_{f}O₂ and the ratio of ZnO/(TiO₂+ZrO₂+H_{f}O₂) are reasonably controlled within certain ranges, synergistic effects can be achieved, and the thermal expansion coefficient can be decreased; however, when the contents and the ratio are out of certain ranges, the effect to decrease the thermal expansion coefficient of the glass fiber is relatively little.

### Industrial Applicability

According to the low expansion coefficient glass fiber of the present invention, CaO, K₂O, and Na₂O ingredients are not added, but B₂O₃, ZnO, TiO₂, ZrO₂, and H_{f}O₂ are simultaneously added, and the proportion of each element is optimized, significantly decreasing the expansion coefficient of the glass fiber in the present invention. The elastic modulus is as high as 93 GPa or more. Therefore, the low expansion coefficient glass fiber meets the requirements of high-precision parts. The low expansion coefficient glass fiber has a forming temperature (lg3.0) of 1330-1365°C, a crystallization upper limit temperature of 1280-1325°C, and a low crystallization rate. The difference between the drawing forming temperature and the crystallization upper limit temperature is ΔT>43°C, which meets the requirements of the drawing process and can achieve scale production.

## Claims

1. A low thermal expansion coefficient glass fiber, **characterized by** being composed of the following ingredients in percentage by weight:
| | |
|---|---|
| SiO₂ | 55.0-63.0% |
| Al₂O₃ | 17.5-25.0% |
| MgO | 9.0-16.5% |
| B₂O₃ | 2.0-9.0% |
| ZnO | 0.1-4.5% |
| TiO₂ | 0.1-4.0% |
| ZrO₂ | 0.1-3.0% |
| H_{f}O₂ | 0.1-2.0% |
| Li₂O | 0.1-2.0% |
other inevitable impurities balance,
wherein,
| | |
|---|---|
| TiO₂+ZrO₂+H_{f}O₂ | 1.0-5.0% |
| ZnO/(TiO₂+ZrO₂+H_{f}O₂) | 0.5-1.5 |
| SiO₂+B₂O₃ | ≥59%. |

2. The low thermal expansion coefficient glass fiber according to claim 1, **characterized by** being composed of the following ingredients in percentage by weight:
| | |
|---|---|
| SiO₂ | 57.0-62.0% |
| Al₂O₃ | 18.5-23.0% |
| MgO | 9.5-13.0% |
| B₂O₃ | 3.0-7.0% |
| ZnO | 1.5-4.0% |
| TiO₂ | 0.5-2.0% |
| ZrO₂ | 0.3-2.0% |
| H_{f}O₂ | 0.2-1.5% |
| Li₂O | 0.5-2.0% |
other inevitable impurities balance.

3. The low thermal expansion coefficient glass fiber according to claim 1 or 2, **characterized in that** the sum of the contents of ZnO, TiO₂, ZrO₂, and H_{f}O₂ is 2.0-8.0%.

4. The low thermal expansion coefficient glass fiber according to claim 3, **characterized in that** ZnO/(TiO₂+ZrO₂+H_{f}O₂) is 0.5 to 1.1.

5. The low thermal expansion coefficient glass fiber according to claim 1 or 2, **characterized in that** the sum of the contents of SiO₂ and B₂O₃ is more than or equal to 61%.

6. The low thermal expansion coefficient glass fiber according to claim 1 or 2, **characterized in that** the sum of the contents of SiO₂ and Al₂O₃ is less than or equal to 80%.

7. The low thermal expansion coefficient glass fiber according to claim 1, **characterized in that** the glass fiber has an expansion coefficient of between 2.77×10⁻⁶/°C and 2.98×10⁻⁶/°C.

8. The low thermal expansion coefficient glass fiber according to claim 1, **characterized in that** the glass fiber has a fiber forming temperature of between 1330°C and 1365°C.

9. The low thermal expansion coefficient glass fiber according to claim 1, **characterized in that** the glass fiber has a crystallization upper limit temperature of between 1280°C and 1325°C.

10. The low thermal expansion coefficient glass fiber according to claim 1, **characterized in that** the glass fiber has an elastic modulus of more than 93 GPa.

## Patentansprüche

1. Glasfaser mit niedrigem Wärmeausdehnungskoeffizient, **dadurch gekennzeichnet, dass** sie aus den folgenden Bestandteilen in Gewichtsprozent besteht:
| | |
|---|---|
| SiO₂ | 55,0-63,0 % |
| Al₂O₃ | 17,5-25,0 % |
| MgO | 9,0-16,5 % |
| B₂O₃ | 2,0-9,0 % |
| ZnO | 0,1-4,5 % |
| TiO₂ | 0,1-4,0 % |
| ZrO₂ | 0,1-3,0 % |
| H_{f}O₂ | 0,1-2,0 % |
| Li₂O | 0,1-2,0 % |
andere unvermeidbare Verunreinigungen Rest,
wobei
| | |
|---|---|
| TiO₂+ZrO₂+H_{f}O₂ | 1,0-5,0 Gew.-% beträgt, |
| ZnO/(TiO₂+ZrO₂+H_{f}O₂) | 0,5-1,5 ist und |
| SiO₂+B₂O₃ | ≥59 Gew.-% beträgt. |

2. Glasfaser mit niedrigem Wärmeausdehnungskoeffizient nach Anspruch 1, **dadurch gekennzeichnet, dass** sie aus den folgenden Bestandteilen in Gewichtsprozent besteht:
| | |
|---|---|
| SiO₂ | 57,0-62,0 % |
| Al₂O₃ | 18,5-23,0 % |
| MgO | 9,5-13,0 % |
| B₂O₃ | 3,0-7,0 % |
| ZnO | 1,5-4,0 % |
| TiO₂ | 0,5-2,0 % |
| ZrO₂ | 0,3-2,0 % |
| H_{f}O₂ | 0,2-1,5 % |
| Li₂O | 0,5-2,0 % |
andere unvermeidbare Verunreinigungen Rest.

3. Glasfaser mit niedrigem Wärmeausdehnungskoeffizient nach Anspruch 1 oder 2, **dadurch gekennzeichnet, dass** die Summe der Gehalte an ZnO, TiO₂, ZrO₂ und H_{f}O₂ 2,0-8,0 Gew.-% beträgt.

4. Glasfaser mit niedrigem Wärmeausdehnungskoeffizient nach Anspruch 3, **dadurch gekennzeichnet, dass** ZnO/(TiO₂+ZrO₂+H_{f}O₂) 0,5 bis 1,1 beträgt.

5. Glasfaser mit niedrigem Wärmeausdehnungskoeffizient nach Anspruch 1 oder 2, **dadurch gekennzeichnet, dass** die Summe der Gehalte an SiO₂ und B₂O₃ ≥61 Gew.-% beträgt.

6. Glasfaser mit niedrigem Wärmeausdehnungskoeffizient nach Anspruch 1 oder 2, **dadurch gekennzeichnet, dass** die Summe der Gehalte an SiO₂ und Al₂O₃ ≤80 Gew.-% beträgt.

7. Glasfaser mit niedrigem Wärmeausdehnungskoeffizient nach Anspruch 1, **dadurch gekennzeichnet, dass** die Glasfaser einen Ausdehnungskoeffizient zwischen 2,77×10⁻⁶/°C und 2,98×10⁻⁶/°C aufweist.

8. Glasfaser mit niedrigem Wärmeausdehnungskoeffizient nach Anspruch 1, **dadurch gekennzeichnet, dass** die Glasfaser eine Faserformungstemperatur zwischen 1330 °C und 1365 °C aufweist.

9. Glasfaser mit niedrigem Wärmeausdehnungskoeffizient nach Anspruch 1, **dadurch gekennzeichnet, dass** die Glasfaser eine obere Kristallisationsgrenztemperatur zwischen 1280 °C und 1325 °C aufweist.

10. Glasfaser mit niedrigem Wärmeausdehnungskoeffizient nach Anspruch 1, **dadurch gekennzeichnet, dass** die Glasfaser einen Elastizitätsmodul von mehr als 93 GPa aufweist.

## Revendications

1. Fibre de verre à faible coefficient de dilatation thermique, **caractérisée par** le fait d'être composée des ingrédients suivants en pourcentage en poids :
| | |
|---|---|
| SiO₂ | 55,0-63,0 % |
| Al₂O₃ | 17,5-25,0 % |
| MgO | 9,0-16,5 % |
| B₂O₃ | 2,0-9,0 % |
| ZnO | 0,1-4,5 % |
| TiO₂ | 0,1-4,0 % |
| ZrO₂ | 0,1-3,0 % |
| H_{f}O₂ | 0,1-2,0 % |
| Li₂O | 0,1-2,0 % |
autres impuretés inévitables le solde,
dans laquelle,
| | |
|---|---|
| TiO₂+ZrO₂+H_{f}O₂ | 1,0-5,0 % |
| ZnO/(TiO₂+ZrO₂+H_{f}O₂) | 0,5-1,5 |
| SiO₂+B₂O₃ | ≥59 %. |

2. Fibre de verre à faible coefficient de dilatation thermique selon la revendication 1, **caractérisée par** le fait d'être composée des ingrédients suivants en pourcentage en poids :
| | |
|---|---|
| SiO₂ | 57,0-62,0 % |
| Al₂O₃ | 18,5-23,0 % |
| MgO | 9,5-13,0 % |
| B₂O₃ | 3,0-7,0 % |
| ZnO | 1,5-4,0 % |
| TiO₂ | 0,5-2,0 % |
| ZrO₂ | 0,3-2,0 % |
| H_{f}O₂ | 0,2-1,5 % |
| Li₂O | 0,5-2,0 % |
autres impuretés inévitables le solde.

3. Fibre de verre à faible coefficient de dilatation thermique selon la revendication 1 ou 2, **caractérisée en ce que** la somme des teneurs de ZnO, TiO₂, ZrO₂, et H_{f}O₂ est de 2,0-8,0 %.

4. Fibre de verre à faible coefficient de dilatation thermique selon la revendication 3, **caractérisée en ce que** ZnO/(TiO₂+ZrO₂+H_{f}O₂) est de 0,5 à 1,1.

5. Fibre de verre à faible coefficient de dilatation thermique selon la revendication 1 ou 2, **caractérisée en ce que** la somme des teneurs de SiO₂ et B₂O₃ est supérieure ou égale à 61 %.

6. Fibre de verre à faible coefficient de dilatation thermique selon la revendication 1 ou 2, **caractérisée en ce que** la somme des teneurs de SiO₂ et Al₂O₃ est inférieure ou égale à 80 %.

7. Fibre de verre à faible coefficient de dilatation thermique selon la revendication 1, **caractérisée en ce que** la fibre de verre a un coefficient de dilatation compris entre 2,77×10⁻⁶/°C et 2,98×10⁻⁶/°C.

8. Fibre de verre à faible coefficient de dilatation thermique selon la revendication 1, **caractérisée en ce que** la fibre de verre a une température de formation de fibre comprise entre 1330 °C et 1365 °C.

9. Fibre de verre à faible coefficient de dilatation thermique selon la revendication 1, **caractérisée en ce que** la fibre de verre a une température limite supérieure de cristallisation comprise entre 1280 °C et 1325 °C.

10. Fibre de verre à faible coefficient de dilatation thermique selon la revendication 1, **caractérisée en ce que** la fibre de verre a un module élastique supérieur à 93 GPa.
